(19) Europäisches Patentamt
European Patent Office
Office européen des brevets

(11) Numéro de publication : **0 105 009**
**B1**

(12) # FASCICULE DE BREVET EUROPÉEN

(45) Date de publication du fascicule du brevet : **26.03.86**

(51) Int. Cl.[4] : **C 08 J 9/14**, C 08 G 8/04

(21) Numéro de dépôt : **83420148.5**

(22) Date de dépôt : **14.09.83**

(54) **Procédé d'obtention de résines alvéolaires par condensation d'isomères du méthyloldihydroxydiphénylméthylène éther, leur application comme matériaux d'isolation.**

(30) Priorité : **20.09.82 FR 8216071**

(43) Date de publication de la demande : **04.04.84 Bulletin 84/14**

(45) Mention de la délivrance du brevet : **26.03.86 Bulletin 86/13**

(84) Etats contractants désignés : **AT BE CH DE GB IT LI LU NL SE**

(56) Documents cités :
**EP-A- 0 066 968**
**FR-A- 1 515 387**
**US-A- 4 353 994**
**THE EUROPEAN JOURNAL OF CELLULAR PLASTICS, vol. 1, no. 1, janvier 1978, pages 42-49, A.J. LOWE et al.: "Phenol formaldehyde foams"**

(73) Titulaire : **SADEV - SOCIETE D'APPLICATION ET DE DEVELOPPEMENT DE TECHNIQUES NOUVELLES**
**50 Cours de la République**
**F-69625 Villeurbanne Cédex Rhône (FR)**

(72) Inventeur : **Rasclard, Michel**
**67, quai Pierre Scize**
**F-69005 Lyon Rhône (FR)**
Inventeur : **Finza, Gilles**
**32 rue Garibaldi**
**F-69006 Lyon Rhône (FR)**
Inventeur : **Michon, Robert**
**30, rue Louis Thevenet**
**F-69004 Lyon Rhône (FR)**

(74) Mandataire : **Maureau, Philippe**
**Cabinet Germain & Maureau Le Britannia - Tour C 20, bld Eugène Déruelle Boîte Postale 3011**
**F-69392 Lyon Cédex 03 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 105 009 B1**

Jouve, 18, rue St-Denis, 75001 Paris, France

**Description**

La présente invention concerne un procédé d'obtention de résines alvéolaires par condensation d'isomères du méthyloldihydroxydiphénylméthylène éther et l'application des résines alvéolaires obtenues comme matériaux d'isolation.

On a déjà proposé de réaliser l'isolation tant des bâtiments (et notamment des bâtiments d'habitation) que des matériels de transports terrestres, maritimes ou aériens, des matériels de fabrication industrielle, des conduites et des canalisations à l'aide de matériaux isolants alvéolaires obtenus, sur le lieu même d'application, par moussage d'une composition liquide réactive suivie d'un durcissement de la mousse ainsi obtenue.

Cette opération, qui peut être réalisée en usine pour le traitement des pièces industrielles ou sur chantier dans le cas du bâtiment et des travaux de génie civil s'effectue soit par coulée ou par injection lorsqu'il y a une cavité à remplir, soit par projection lorsqu'il s'agit de recouvrir une surface.

Les compositions liquides réactives actuellement utilisées dans ce but sont choisies parmi les résines urée-formol, polyuréthanes, époxy ou phénol-aldéhydes.

C'est en raison de leur grande facilité d'application que les résines urée-formol ont été employées depuis une vingtaine d'années, sur une vaste échelle en Europe du Nord et en Amérique du Nord pour l'isolation des bâtiments et maisons individuelles.

On utilise généralement une machine pour l'application des systèmes chimiques en deux composants à rapport volumétrique 50/50. On charge dans les réservoirs de la machine, d'une part la résine qui est une solution aqueuse d'un précondensat d'urée-formaldéhyde contenant un plastifiant, d'autre part, le catalyseur et le moussant : une solution aqueuse d'un tensio-actif anionique en milieu acide. Les deux composants sont mélangés, moussés avec de l'air et le produit résultant, qui a l'aspect et la consistance d'une crème à raser, est, soit coulé sur les planchers, soit injecté à travers de petits trous dans les espaces vides entre cloisons et murs. La mousse durcit en une minute environ et donne un matériau alvéolaire. Initialement, la densité, compte tenu de l'humidité est d'environ 40 à 48 kg/m$^3$, mais après un séchage nécessitant quelques jours à plusieurs semaines, la densité s'abaisse jusqu'à une limite comprise entre 10 et 13 kg/m$^3$ environ.

Un retrait important accompagne malheureusement la déshydratation et est responsable d'une perte de performance de l'isolant thermique.

Une étude approfondie sur ce sujet de A.M. BOWLES et C.J. SHIRLIFFE : « Development of a Canadian Standard for Urea Formaldehyde thermal Wall insulation » Thermal Insulation Performances, A.S.T.M. STP 718, D.L. Mc ELROY et R.P. TYE, Eds, American Society for Testing and Materials 1980 pp. 361-394, conclut que le retrait peut aller jusqu'à 21 % en volume et que l'on estime qu'il réduit l'efficacité des performances thermiques du matériau de 60 % par rapport au même matériau supposé sans retrait. Ce résultat défavorable confirmé par de nombreuses mesures, condamne l'emploi des mousses urée-formol.

On a pensé que les mousses de polyuréthane pourraient efficacement remplacer les mousses urée-formol grâce à leurs excellentes propriétés thermiques, mécaniques, et à leurs bonnes stabilités dimensionnelles.

Cependant, on a constaté qu'elles ne convenaient pas dans la généralité des cas à une mise en œuvre par injection. En effet, l'expansion de la mousse s'accompagne d'une forte augmentation de pression que les parois des cavités à remplir ne peuvent qu'exceptionnellement supporter. On a mesuré des pressions d'expansion de l'ordre du kg au cm$^2$. Lorsque l'on remplit en atelier, avec une résine polyuréthane, une structure métallique du genre panneau pour mur rideau, on déforme les surfaces au point que le panneau sandwich devient inutilisable.

De même, si l'on injecte une résine polyuréthane entre mur et cloison de bâtiment, on constate une fréquence de rupture de cloison inacceptable.

On a proposé d'utiliser des cloisons spécialement renforcées, mais outre que dans la construction neuve le procédé perd une partie de son intérêt économique par rapport à d'autres modes d'isolation, il ne permet pas de traiter le parc des bâtiments existants, ce qui correspond à la demande, de loin, la plus importante.

Les mousses de polyuréthane conviennent pour une mise en œuvre par projection, et on peut citer des réalisations, notamment dans le bâtiment pour la rénovation d'isolation de toiture terrasse, mais on rencontre avec ce procédé des inconvénients et des limitations d'emplois. Parmi les inconvénients, on cite l'effet défavorable de l'eau contenue dans les dalles en béton et autres supports sur la résine en cours de durcissement. On obtient alors au contact du matériau support une mousse dont les caractéristiques sont altérées. Une autre difficulté fréquemment rencontrée dans le bâtiment est une mauvaise maîtrise de la réaction de durcissement aux températures extérieures extrêmes en hiver et en été, le domaine de température d'emploi étant limité à l'intervalle 10 à 30 °C.

Les limitations d'emploi ayant trait à la projection de mousse de polyuréthane proviennent pour une bonne part du mauvais comportement au feu de ces matériaux, ce qui est également le cas des mousses urée-formol.

Les mousses ordinaires de polyuréthane sont facilement inflammables ce qui les rend impropres aux

usages où il y a un risque d'incendie. C'est le cas, notamment, dans le bâtiment pour l'isolation des planchers des combles et dans tout système d'isolation comprenant une lame d'air. Pour y remédier, certains fabricants de polyols proposent des compositions qui permettent d'obtenir des mousses de polyuréthane dont les classements feu sont améliorés (classement M.1 au test à l'épiradiateur selon la norme NF. P. 92-501).

Cependant, de telles mousses contiennent de l'azote, du chlore et du brome et, en cas de combustion, émettent des fumées opaques, et des vapeurs hautement toxiques, ce qui ne résout pas de façon satisfaisante la sécurité vis-à-vis de l'incendie.

Les résines époxy offriraient des possibilités techniques intéressantes dans le domaine des mousses pour l'isolation thermique si leur prix n'en limitait les emplois aux températures élevées, notamment pour le calorifugeage des tuyauteries de vapeur. Leur comportement au feu, semblable à celui des mousses de polyuréthane en limite également l'emploi.

Les résines phénol-aldéhydes, dites résines phénoliques, présentent l'avantage d'un comportement au feu tout à fait exceptionnel pour des matériaux riches en carbone et en hydrogène. Il est possible d'obtenir des mousses non inflammables dont le classement feu au test de l'épiradiateur est M.1.

C'est la raison pour laquelle on a recherché à développer les applications de ces mousses partout où il y a un risque d'incendie, notamment dans le bâtiment et dans le matériel de transport.

La méthode générale d'obtention des mousses en résines phénoliques consiste à mélanger une résine dite « Résol » avec un composé acide, en présence d'un agent de surface et d'un agent gonflant, à laisser ensuite réagir le mélange qui, en raison de l'exothermicité de la réaction, donne une mousse fluide qui se durcit progressivement jusqu'à l'achèvement de la réaction.

On sait que les résines phénol-aldéhydes à base de résines « Résol » peuvent être mises en œuvre sous forme de mousse selon les procédés décrits précédemment pour les autres résines, c'est-à-dire les procédés par coulée, par projection et par injection. Cependant, la généralisation de leurs emplois se heurte encore actuellement à de nombreuses difficultés qui n'ont pas été maîtrisées d'où il résulte que la transformation de ces résines en mousse est aujourd'hui marginale.

On cite néanmoins quelques réalisations, notamment des fabrications de panneaux isolants, le remplissage de moules et de cavités dans des pièces industrielles. Il faut noter qu'il ne s'agit que de fabrications en atelier. Par contre, les tentatives de fabrication sur chantier selon les techniques in situ ont donné des résultats incertains et généralement peu reproductibles à cause des variations des conditions d'ambiance qui sont le plus souvent impossible à maîtriser. Ces essais n'ont pas donné lieu à des développements industriels.

Les inconvénients des résines phénol-aldéhydes à base de résines « Résol » mis en évidence d'une façon générale, mais plus particulièrement gênants pour une exploitation sur chantier avec les procédés in situ, sont les suivants :

— leur faible réactivité :

On sait que pour une mise en œuvre convenable d'une résine pour mousse à deux composants, il est nécessaire de disposer d'un temps suffisant pour réaliser le mélange et le disposer dans le moule ou la cavité à remplir ; ce temps ne doit pourtant pas être excessif, car il nuirait au déroulement des opérations, et en outre, il ferait courir des risques de fuite lorsque les cavités ne sont pas étanches et d'absorption par les parois lorsqu'elles sont poreuses ainsi que c'est le cas dans le bâtiment.

Avec les résines urée-formol, on dispose d'un temps de coulée un peu inférieur à une minute, ce qui est considéré comme un modèle.

La réaction de moussage doit être ensuite rapide et le durcissement doit être accompagné d'une exothermie aussi violente que possible afin de réaliser une réaction complète et d'éliminer totalement les matières volatiles.

Ainsi, le modèle souhaité de la courbe cinétique de réaction est, après un palier d'une minute, une montée exponentielle en température.

Avec les résines Résol, il est possible de modifier la réactivité en jouant sur différents moyens : la concentration en groupement méthylol, la nature et la concentration en catalyseur de durcissement. On peut ainsi régler la durée du palier, mais il s'est avéré que quand cette première condition est satisfaite, l'exothermie de la réaction est insuffisante pour donner, à température ambiante et dans le temps souhaité de l'ordre de deux minutes après mise en contact des deux composants une mousse sèche et totalement durcie ;

— leur viscosité importante :

Les viscosités des résines Résol pour mousse sont généralement comprises entre 1 et 5 Pas. Il est possible d'abaisser cette viscosité légèrement en dessous de 1 Pas en augmentant la teneur en eau du produit, mais ceci diminue, à la fois, la réactivité de la résine et les propriétés du matériau final, notamment la stabilité dimensionnelle.

Les viscosités des résines Résol ne permettent pas d'obtenir des mousses aussi légères qu'avec des résines urée-formol et la densité apparente du matériau final ne peut descendre en dessous de 30 $kg/m^3$ dans les meilleures conditions ;

— la nécessité d'utiliser un agent de durcissement (catalyseur) en quantités excessives.

Pour palier une réactivité insuffisante et des densités apparentes de mousse élevées, on est amené à accélérer la réaction en utilisant des quantités très importantes d'agents de durcissement. Ceux-ci sont

des composés acides du type acide sulfonique, qui, même dans le cas où ils se combinent avec le Résol, ne doivent pas être utilisés en quantités excessives car ils augmentent l'hydrophilie et le pouvoir corrosif de la mousse finale ;

— la plage restreinte de leurs températures d'application, entre 10 et 25 °C :

En dessous de 10 °C, les produits sont plus difficilement manipulables, il y a des risques de bouchage dans les pompes, les tuyaux et les têtes de mélange. En outre, ils sont encore moins réactifs. Au-dessus de 25 °C la maîtrise de la réaction devient aléatoire.

Or, pour les procédés nécessitant la fabrication sur chantier, il est demandé les mêmes facilités de mise en œuvre qu'avec les résines urée-formol, c'est-à-dire un intervalle allant de 0 à 35 °C ;

— des stabilités insuffisantes au stockage :

Ces résines s'autocondensent avec augmentation de leur viscosité. La réaction est d'autant plus rapide que la température de stockage est plus élevée. Les fabricants de résine Résol prescrivent des durées limites d'utilisation inférieure à quelques semaines. Pour des fabrications sur chantier, souvent situés en des lieux difficiles à approvisionner surtout lorsqu'il s'agit de pays étrangers, cette limitation ne peut être respectée ;

— une instabilité dimensionnelle alliée à une friabilité :

Il est connu que les propriétés de résistance mécanique des résines mousse à base de Résol sont faibles, particulièrement la résistance à la traction. Dans ces conditions, il est indispensable que la stabilité dimensionnelle, mesurée selon la norme NFT 56122, c'est-à-dire après plusieurs cycles comprenant une phase de conditionnement à température ambiante et dans une atmosphère à humidité relative constante, suivie d'une phase d'étuvage, donne lieu à des variations aussi faibles que possible. On admet que pour éviter tout risque de dégradation de la mousse dans le temps, notamment que l'on appelle du faïençage, il est nécessaire que la stabilité dimensionnelle soit inférieure à 2 %. Cette valeur est difficile à assurer de façon constante par des mousses obtenues à partir de résines Résol.

La présente invention s'est donnée pour but de remédier aux inconvénients précités, et plus spécialement de fournir un procédé d'obtention de matériau alvéolaire isolant, applicable « *in situ* » sur le chantier sans que l'on se heurte aux difficultés présentées par les matériaux de ce type obtenus à partir des résines « Résol ».

C'est ainsi qu'elle a pour objet un procédé d'obtention de résine alvéolaire dont l'originalité réside en ce qu'il consiste à effectuer en présence d'un agent de durcissement la condensation d'au moins un isomère du méthyloldihydroxydiphénylméthylène éther de formule brute $C_{15}H_{16}O_4$ et spécialement du 3 méthylol,2,2'-dihydroxy-diphénylméthylène éther de formule développée :

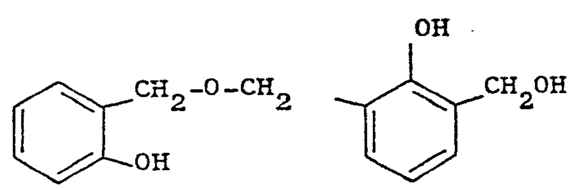

et du 3-méthylol,2,4'-dihydroxy-diphénylméthylène éther de formule développée :

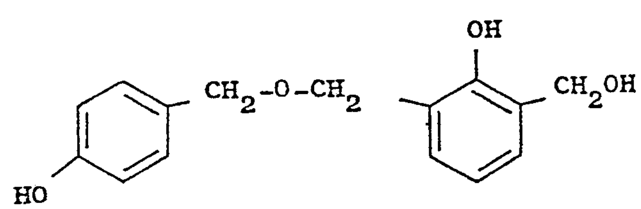

ces deux isomères étant utilisés en mélange tel qu'il résulte des conditions de fabrication.

Selon un mode de réalisation préféré de l'invention, le mélange est constitué en majorité de 3-méthylol-2,2'-dihydroxydiphénylméthylène éther.

L'emploi des isomères du méthyloldihydroxydiphénylméthylène éther (M.D.D.M.E.) permet en effet, dans les conditions qui seront précisées ci-après, de réaliser des mousses isolantes pouvant être mises en œuvre selon les procédés décrits plus haut de coulée, d'injection, de projection et de pulvérisation.

La transformation du M.D.D.M.E. en résine alvéolaire peut être réalisée de façon similaire à celle des résines « Résol » et notamment en présence des mêmes agents de durcissement. Cependant, la constitution chimique du M.D.D.M.E., sa cinétique réactionnelle, son aspect physique, les propriétés des résines obtenues, se différencient nettement des résines « Résol » et de leurs produits de condensation comme le montre ce qui suit :

Les résines « Résol » sont des polycondensats d'un composé hydroxyaromatique tel que le phénol avec le formol. Elles peuvent être représentées selon la formule générale :

$$HOCH_2 - Ar\ OH - \left[ CH_2 - Ar\ OH\ (CH_2OH)_x \right]_y - H$$

dans laquelle x est, selon les unités récurrentes, égal soit à l'unité, soit à zéro, chaque noyau hydroxy aromatique n'étant pas obligatoirement substitué par un groupement méthylol, et y est un nombre entier, très variable selon les résines, et pouvant aller de plusieurs unités à plusieurs dizaines d'unités.

Les résines « Résol » sont donc caractérisées, au niveau de leur constitution chimique, par des noyaux hydroxy aromatiques liés les uns aux autres par des groupements méthylène ; un certain nombre de ces noyaux portent, en outre, en position ortho ou para par rapport à l'hydroxyl phénolique, des groupements méthylol à l'exclusion de toute autre fonction réactive.

Le durcissement des résines « Résol » en présence de composés acides appelés couramment durcisseurs ou « catalyseurs », est réalisé par condensation des groupements méthylol avec des noyaux hydroxy aromatiques pouvant appartenir, soit à la résine elle-même, soit au durcisseur. Les durcisseurs habituels appartiennent à la catégorie des acides sulfoniques aromatiques ; ce sont, soit des composés simples comme l'acide para toluène sulfonique, l'acide hydroxybenzène sulfonique, etc., soit des résines sulfoniques par exemple les condensats de l'acide hydroxybenzènesulfonique avec le formol.

Selon la technique conventionnelle, la réaction de durcissement à partir de la résine « Résol » donne une mousse insoluble et infusible. Il y a donc formation d'un réseau tridimensionnel à partir des molécules initiales ce qui suppose que le nombre moyen de groupements méthylol par mole de résine Résol soit supérieur à l'unité.

Le M.D.D.M.E. est un composé chimiquement différent et ses produits de condensation n'ont pas les mêmes propriétés.

Tout d'abord, le M.D.D.M.E. est un mélange d'isomères de formules bien définies ainsi qu'elles ont été représentées ci-avant.

On constate que contrairement aux résines « Résol » les formules ne contiennent ni unité récurrente, ni homologue. Le M.D.D.M.E. est identifiable par spectrométrie R.M.N. Sa masse moléculaire est 260.

Ensuite, il faut souligner que la réactivité particulière du M.D.D.M.E. provient essentiellement du groupement diméthylène éther $—CH_2—O—CH_2—$ situé entre les deux noyaux aromatiques substitués du composé. Notons que les résines « Résol » ne contiennent pas un enchaînement internucléaire semblable, mais, à la place, un groupement méthylène qui n'est pas réactif et que leur durcissement est réalisé exclusivement par réaction des groupements méthylol sur les noyaux aromatiques substitués.

La cinétique du durcissement du M.D.D.M.E. procède différemment. Elle fait intervenir, d'une part le groupement méthylol (celui-ci ne permet pas à lui seul la formation d'un réseau) et d'autre part, le groupement diméthylène éther.

Pour une bonne compréhension de l'invention, on trouvera dans ce qui suit, un schéma réactionnel du durcissement du M.D.D.M.E. Cependant, le processus n'est pas exclusif et peut différer selon les conditions opératoires du durcissement qui sont principalement la nature et la concentration en durcisseur ainsi que la température.

Par conséquent, il est évident que les explications qui suivent ne sauraient en rien limiter la portée de l'invention.

On a étudié notamment le durcissement du M.D.D.M.E. à température ambiante en présence de durcisseurs acides qui peuvent être identiques à ceux employés pour durcir des résines « Résol ».

La réaction de polycondensation (I) s'amorce à partir du groupement méthylol. Elle est du type ionique et sa vitesse est initialement proportionnelle à la concentration en ions hydrogène.

Le groupement méthylol se condense avec un noyau hydroxyaromatique substitué avec formation d'un pont méthylène et élimination d'une molécule d'eau (Réaction I ci-après).

La réaction s'accompagne d'un dégagement thermique qui accélère la décomposition en milieu acide du groupement diméthylène éther avec formation d'un pont méthylène internucléaire et élimination d'une molécule de formol (Réaction II ci-après).

La synergie réactionnelle se traduit par une accélération très importante de la montée en température et une vaporisation des sous-produits de la réaction.

Lorsque la déshydratation est complète, le milieu n'est plus ionisé. La décomposition des groupements diméthyléther se poursuit néanmoins par une réaction de type radicalaire.

Le formol généré par la réaction II présente une grande réactivité pendant la phase ionique réactionnelle. Il se condense avec deux noyaux hydroxyaromatiques substitués en créant ainsi un nouveau pont méthylène avec élimination d'une molécule d'eau. Il participe essentiellement à la réticulation du polycondensat (Réaction III ci-après).

(Voir figure p. 6)

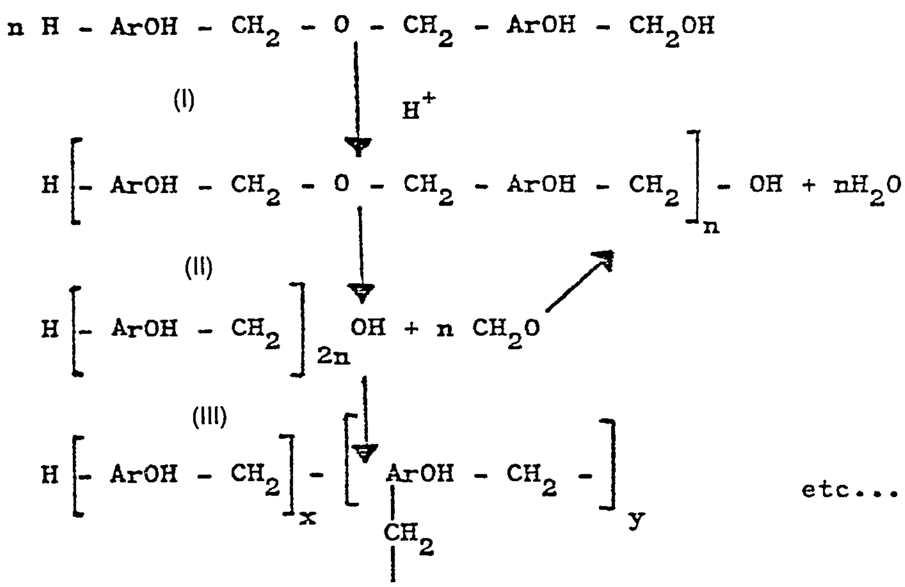


Après l'étape ionique, le formol naissant se dégage avec la vapeur d'eau sans réagir sur le polycondensat et il achève ainsi l'expansion de la résine. Le rendement de la réaction du formol sur le polycondensat est incomplet. Il en résulte que le réseau macromoléculaire est modérément réticulé, ce qui explique les propriétés particulières des résines alvéolaires obtenues par condensation du M.D.D.M.E. principalement une résilience et une stabilité dimensionnelle très supérieures à celles des résines issues des « Résol ».

Enfin, après achèvement de la réaction, il ne subsiste plus de groupement susceptible de générer à nouveau du formol, même lorsque le produit est soumis à une élévation de la température jusqu'à sa pyrolyse.

Selon un procédé de réalisation de l'invention, on utilise un lot brut de fabrication de M.D.D.M.E. dont la composition obtenue par l'analyse est la suivante :

| | |
|---|---|
| — M.D.D.M.E. : | 75 % |
| — Eau : | 13,5 % |
| — 2-6-diméthylolphénol : | 5 % |
| — Méthylolphénol (mélange d'isomères) : | 4 % |
| — Phénol : | 1,2 % |
| — Sels minéraux (résidu de catalyseur) : | 1 % |
| — Impuretés non identifiées : | 0,3 % |

Le M.D.D.M.E. est généralement constitué par un mélange de deux isomères :
— 3-méthylol,2,2'-dihydroxydiphénylméthylène éther
— 3-méthylol,2,4'-dihydroxydiphénylméthylène éther

Ces deux isomères sont dans la proportion pondérale de 9 parties du premier pour une partie du second.

Le produit brut que l'on appellera dans ce qui suit « M.D.D.M.E. qualité technique » est un liquide clair, d'odeur rappelant le phénol. La recherche de traces de composés aldéhydiques a donné : résultat néant. Le produit peut être manipulé à l'air libre sans risque particulier pour les voies respiratoires.

Les caractéristiques du « M.D.D.M.E. qualité technique » sont les suivantes :

| | |
|---|---|
| Viscosité mesurée au viscosimètre Brookfield à 23 °C : | 170-180 centipoises |
| Densité à 22 °C $d_4^{22}$ : | 1,187 g/cm$^3$ |
| pH d'une solution à 10 % dans l'eau : | 7,4 |

Malgré sa haute réactivité, le produit peut être stocké plusieurs mois à des températures inférieures à 20 °C sans qu'il soit observé une évolution importante de sa viscosité ; après deux mois, celle-ci atteint seulement 200-220 mPas.

Pour obtenir une composition moussante à base de M.D.D.M.E., on ajoute un agent moussant insoluble et/ou un agent de surface afin de l'émulsionner. Il est préférable que le M.D.D.M.E. contienne une certaine quantité d'eau, celle-ci étant utile pour le moussage. C'est le cas lorsqu'on utilise du « M.D.D.M.E. qualité technique », si non, on ajoute de l'eau de sorte que la composition moussante en contienne de préférence entre 5 et 20 %.

L'agent moussant est additionné à raison de 0,1 à 12 %. Il peut être avantageusement un liquide à bas point d'ébullition. On le choisit parmi :

— les hydrocarbures aliphatiques saturés, par exemple l'éther de pétrole qui est un mélange d'hydrocarbures obtenus par distillation fractionnée de pétrole et qui est caractérisé par une courbe de distillation à la pression normale allant de 30 à 70° ;

— les éthers aliphatiques par exemple l'éther éthylique ;

— les hydrocarbures halogénés, notamment le chlorure de méthylène et certains Fréons comme le Fréon 11 (Fluorotrichlorométhane) et le Fréon 113 (1,1,2-trichloro-2,2,1-trifluoroéthane).

Il peut être plus économique d'employer un mélange d'agents moussants par exemple le Fréon 113 CM qui est un mélange de Fréon 113 et de chlorure de méthylène.

L'agent de surface a pour objet la réalisation d'une émulsion stable de l'agent moussant dans la solution aqueuse de M.D.D.M.E. Il est utilisé à raison de 0,01 à 6 %. On utilise de préférence des agents de surface non ionogènes parce qu'ils n'ont pas un effet défavorable sur la stabilité du M.D.D.M.E. On a sélectionné plus particulièrement les polyéthoxyéthers des alcools gras, des alkyls phénols, des polysilicones.

On obtient les meilleurs résultats en utilisant des mélanges de ces agents de surface, confectionnés de telle sorte que leur équilibre hydrophile-lipophile appelé « H.L.B. » soit accordé avec le « H.L.B. » requis pour émulsionner l'agent moussant dans du M.D.D.M.E. contenant de 5 à 20 % d'eau.

Pour émulsionner l'éther de pétrole, on utilise par exemple l'émulsionnant E dont la composition est la suivante :

| | |
|---|---|
| — condensat 4 moles d'oxyde d'éthylène (O.E.) sur alcool oléocétylique | 70 % |
| — condensat 4 (O.E.) sur Nonylphénol | 15 % |
| — condensat 9 (O.E.) sur Nonylphénol | 15 % |

Les compositions moussantes à base de M.D.D.M.E. sont moussées et durcies par addition d'un catalyseur acide appelé durcisseur.

Les essais réalisés montrent que la vitesse de réaction du M.D.D.M.E. est, dans sa phase initiale, proportionnelle à la concentration en ions hydrogène, et qu'il est possible d'utiliser comme durcisseur les acides dont la constante de dissociation est suffisante pour abaisser le pH de l'eau en dessous de 4 unités pH et de préférence en dessous de 2.

Il est évident qu'un nombre important de composés minéraux et organiques satisfont à cette exigence de sorte qu'il n'est pas nécessaire d'en préciser leurs natures et compositions.

Les meilleurs résultats sont obtenus pour une acidité des mélanges — M.D.D.M.E. plus durcisseurs — comprise entre 0,5 et 2 unités pH. Pour des valeurs plus élevées du pH la réaction est molle d'où la nécessité d'un apport externe de chaleur.

Pour des valeurs inférieures, la réaction devient difficilement maîtrisable. Dans le domaine compris entre 0,5 et 2 unités pH, les compositions moussantes à base de M.D.D.M.E. moussent et durcissent à des températures initiales comprises entre − 5° et + 35 °C, ce qui permet la fabrication de résines alvéolaires par les procédés *« in situ »* pour l'isolation des bâtiments.

Cependant, si les conditions relatives au pH sont nécessaires pour une bonne mise en œuvre des produits sur chantier, par contre elles impliquent de fortes acidités qui sont, si l'on n'y prend garde, responsables d'une hygroscopie et d'un pouvoir corrosif des résines alvéolaires ainsi fabriquées.

C'est pour éviter ces défauts qu'on utilise de préférence des durcisseurs acides qui agiront, à la fois comme catalyseur et comme agent de copolycondensation avec le M.D.D.M.E. Il est clair que le but est d'obtenir dans des conditions satisfaisantes de moussage et de durcissement, une résine alvéolaire contenant le moins possible de composés acides libres, notamment de composés extractibles par l'eau.

On a trouvé ainsi que les durcisseurs préférés du procédé conforme à l'invention sont les acides sulfoniques organiques caractérisés par :

— un ou plusieurs noyaux aromatiques (benzénique, naphténique...)

— un groupement hydroxyle du type phénolique sur au moins l'un de ces noyaux

— un ou plusieurs groupements acide sulfonique sur au moins l'un de ces noyaux

— et éventuellement une chaîne hydrocarbonée $C_nH_{2n}$ pour lier les noyaux entre eux.

De tels acides sulfoniques sont employés, soit séparément, soit mélangés entre eux. Ils peuvent être dilués dans du phénol afin de régler l'indice d'acidité et par voie de conséquence, la réactivité du moussage et du durcissement avec le M.D.D.M.E. A titre d'exemples de tels durcisseurs, on peut citer :

— les acides phénolsulfoniques $C_6H_4(OH)(SO_3H)$ mélange des isomères

— les acides crésolsulfoniques $C_6H_3(CH_3)(OH)(SO_3H)$

— les acides naphtosulfoniques $C_{10}H_6(OH)(SO_3H)$

— les acides dihydroxydiphénylméthanesulfoniques $C_6H_4OH—CH_2—C_6H_3(OH)(SO_3H)$

— les acides dihydroxydiphénylpropanesulfoniques $C_6H_4OH—C(CH_3)_2C_6H_3(OH)(SO_3H)$

— les acides dihydroxydiphénylbutanesulfoniques $C_6H_5(OH)—C—(CH_3)(C_2H_5)C_6H_3(OH)(SO_3H)$

— les acides poly (hydroxyphénylméthylène sulfoniques) $H\text{-}[C_6H_2(OH)(SO_3H)—CH_2]_n—C_6H_3(OH)(SO_3H)$

— les acides polysulfoniques obtenus par sulfonation partielle des résines novolaques liquides. La

formule générale de ces acides est similaire à la formule précédente, mais le nombre de groupements sulfoniques est inférieur au nombre de noyaux hydroxyphényl. Les résines novolaques liquides sont elles-mêmes obtenues par condensation du phénol avec le formol en présence d'un catalyseur acide et avec un rapport moléculaire phénol sur formol supérieur à l'unité.

Les exemples suivants illustrent l'invention sans toutefois la limiter.

Exemple 1

La composition moussante est obtenue par addition à 100 parties en poids de « M.D.D.M.E. qualité technique » tel que précédemment défini des additifs suivants :

— agent de surface : Emulsionnant E : 3 parties
— éther de pétrole : 8 parties.

Le durcisseur est préparé par mélange de 77 parties en poids d'acide phénolsulfonique technique avec 23 parties en poids de phénol cristallisé contenant 10 % d'eau.

On mélange à l'aide d'une turbine assurant un brassage énergique 1 000 g de la composition moussante avec 250 g de durcisseur. Après 20 secondes d'agitation, le mélange commence à mousser et prend l'aspect d'une crème. On le coule alors dans une cavité cylindrique de volume 100 litres. La mousse foisonne intensément et déborde du cylindre. Les matières volatiles s'échappent sous forme de vapeur. Trois minutes après le mélange des deux composants, soit environ deux minutes après l'expansion, la mousse, bien qu'encore chaude, est totalement durcie et sèche.

On découpe dans le bloc des éprouvettes sur lesquelles on réalise les mesures suivantes :

| | |
|---|---|
| — masse volumique apparente : | 10,6 kg/$m^3$ |
| — résistance à la compression : | 0,3 kg/$cm^2$ |
| — stabilité dimensionnelle selon norme N.F.T. 56122 : | variations inférieures à 1 % |
| — conductivité thermique en W/mK : | 0,030 |
| — essai de réaction au feu selon test à l'épiradiateur : | classement M.1 |

Les résidus du bloc sont déchiquetés dans un broyeur à lames. On obtient ainsi des granulés dont les dimensions sont comprises entre 0,5 cm et 6 cm. Leur masse volumique apparente est 8 à 9 kg. Ces granulés peuvent être utilisés pour l'isolation.

Exemple 2

Composition moussante :

| | |
|---|---|
| M.D.D.M.E. qualité technique : | 100 parties en poids |
| Agent de surface type silicone (référence DC 193 Dow-Corning) : | 2 parties en poids |
| Trichlorofluorométhane (Fréon 11) : | 2 parties en poids |
| 1.1.2.trifluorotrifluoroéthane (Fréon 113) : | 2 parties en poids |
| Chlorure de méthylène : | 2,5 parties en poids |

Durcisseur :

Il est préparé par sulfonation, avec 77 parties en poids d'acide sulfurique à 95 % d'un mélange constitué par 51,5 parties de dihydroxydiphénylméthane et 48,5 parties de phénol.

Fabrication de panneaux isolants :

On charge la composition moussante et le durcisseur dans les réservoirs d'une machine pour l'application des systèmes chimiques en deux composants à rapport volumétrique variable. On règle le rapport de dosage de sorte que le débit massique soit de 15 parties de durcisseur pour 100 parties de la formulation moussante. Les produits sont mélangés dans une tête dynamique et sont ensuite coulés à raison de 4,5 kg, à l'intérieur d'un moule fermé parallélépipédique 3 m/1 m/0,06.

Le temps de coulée est de 10 secondes, et correspond à un poids de 4,5 kg. Après trois minutes, on ouvre le moule d'où l'on retire un panneau calibré, durci et non poisseux dont les caractéristiques sont les suivantes :

| | |
|---|---|
| masse volumique apparente : | 24 kg/$m^3$ |
| résistance à la compression : | 0,6 kg/$cm^2$ |
| stabilité dimensionnelle : | variations inférieures à 1 % |
| conductivité thermique en W/mK : | 0,032 |
| essai de réaction au feu : | classement M.1 |

Détermination des produits de combustion et de pyrolyse :

L'essai est réalisé par combustion de 1 g du matériau dans un tube de quartz placé dans un four tubulaire maintenu à 700 °C et parcouru par un courant d'air à débit constant.

Il se dégage :

— 2 800 mg de gaz carbonique
— 330 mg de monoxyde de carbone
— absence d'ions halogènes et cyanure

Exemple 3

Composition moussante

| | |
|---|---|
| M.D.D.M.E. de qualité technique : | 100 parties en poids |
| Agent de surface Atmer 171 de Atlas Chemical : | 1,5 parties en poids |
| Trichlorofluorométhane (Fréon 11) : | 2,5 parties en poids |
| 1,1,2-trichlorotrifluoroéthane (Fréon 113) : | 2,5 parties en poids |

Durcisseur

| | |
|---|---|
| Durcisseur de l'exemple n° 2 : | 80 parties en poids |
| Acide phénolsulfonique : | 20 parties en poids |

Isolation des murs d'une habitation avec vide d'air

On utilise une machine pour l'application des systèmes chimiques en deux composants à rapport volumétrique 100/30. Les produits sont chargés, dans les réservoirs d'où ils sont véhiculés indépendamment, par l'intermédiaire de pompes pneumatiques dans un faisceau tubulaire de 50 m de long. A l'extrémité de ce faisceau est monté un pistolet à mélangeur statique avec injection d'air.

Pour accéder au vide existant entre paroi et mur, on pratique de petits orifices à intervalles régulièrement espacés d'environ 1 mètre. On introduit l'extrémité du pistolet successivement dans les orifices en commençant par le bas et on injecte le mélange jusqu'à débordement de la résine alvéolaire par l'orifice voisin. Le temps de moussage est d'environ 20 secondes ce qui permet une productivité horaire satisfaisante de l'ordre de 60 $m^2$ de mur isolé pour une épaisseur de vide de 6 cm.

L'opération peut être réalisée avec des températures ambiantes de – 5 °C à + 35 °C.

Remplissage d'une structure métallique creuse et de 8 cm d'épaisseur pour mur-rideau

On procède de la même façon que pour l'isolation des murs d'une habitation avec vide d'air, cependant, il est plus pratique d'effectuer l'opération en atelier. Après remplissage par la résine alvéolaire, on ne constate aucune déformation de la structure métallique.

Isolation au sol des combles

Les formulations citées au début de cet exemple permettent avec les mêmes dispositifs de machine l'épandage de résines alvéolaires sur les surfaces de combles entre solives. L'épaisseur d'application peut atteindre 20 cm en une seule passe.

Les masses volumiques apparentes des résines alvéolaires sont mesurées sur des éprouvettes prélevées sur chantier :

— cas par injection : 18 à 20 kg au $m^3$ selon épaisseur
— cas par épandage : 12 kg au $m^3$

Exemple 4

Composition moussante : identique à celle de l'exemple 3
Durcisseur : identique à celui de l'exemple 2
Isolation par pulvérisation sur plafond de sous-sol de bâtiment

La machine décrite à l'exemple 3 est modifiée de façon que le rapport volumétrique soit fixé à 100/100.

On pulvérise sur le plafond une fine couche du mélange moussant qui se transforme aussitôt en une résine alvéolaire d'une épaisseur de 3 cm environ. Le moussage et le durcissement sont instantanés de sorte qu'il n'y a aucun risque d'écoulement.

La masse volumique apparente de l'isolant varie entre 25 et 35 kg au $m^3$.

La résistance à la compression dépasse 1 kg au $cm^2$.

Exemple 5

Composition moussante : de l'exemple 2.

Durcisseur : novolaque sulfonée type Alvéophen 76058 fabriqué par la société SHEBY appartenant au Groupe URACHEM.

Fabrication de panneaux isolants

Le rapport entre la composition moussante et le durcisseur est 100/20.

On procède de façon analogue à l'exemple 2. Le temps de coulée est de 16 secondes et correspond à un poids de 7,2 kg. Le durcissement est de 5 minutes.

Les caractéristiques du panneau sont les suivantes :

| | |
|---|---|
| Masse volumique apparente : | 38 $kg/m^3$ |
| Résistance à la compression : | 1,2 $kg/cm^2$ |
| Stabilité dimensionnelle : | variation inférieure à 1 % |
| Conductivité thermique en W/mK : | 0,034 |
| Essai de réaction au feu : | classement M.1 |

**Revendications**

1. Procédé d'obtention de résines alvéolaires, caractérisé en ce qu'il consiste à effectuer en présence d'un catalyseur de durcissement, la condensation d'au moins un des isomères du méthyloldihydroxydiphénylméthylène éther de formule brute $C_{15}H_{16}O_4$.

2. Procédé selon la revendication 1, caractérisé en ce que lesdits isomères sont :

— le 3-méthylol,2,2'-dihydroxy-diphénylméthylène éther de formule :

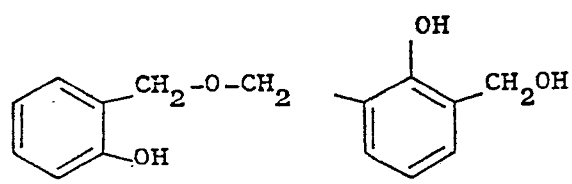

— et le 3-méthylol,2,4'-dihydroxy-diphénylméthylène éther de formule :

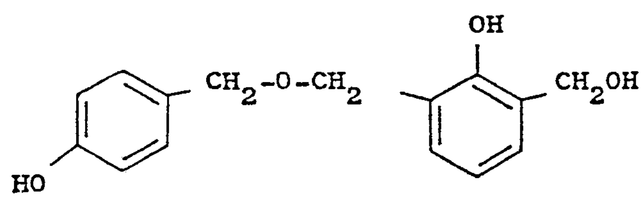

3. Procédé selon les revendications 1 et 2, caractérisé en ce que les isomères proviennent de lots bruts de fabrication contenant du méthyloldihydroxydiphénylméthylène éther, en mélange avec de l'eau, du méthylolphénol et du diméthylolphénol.

4. Procédé selon l'une quelconque des revendications 1 à 3, caractérisé en ce que la condensation d'au moins l'un des isomères du méthyloldihydroxydiphénylméthylène éther est effectuée en présence d'un agent moussant et/ou d'un agent de surface.

5. Procédé selon l'une quelconque des revendications 1 à 4, caractérisé en ce que la teneur en agent moussant insoluble se situe entre 0,1 et 12 % et que la teneur en agent de surface se situe entre 0,01 et 6 %.

6. Procédé selon les revendications 4 et 5, caractérisé en ce que l'agent moussant insoluble est choisi parmi les hydrocarbures aliphatiques saturés, les éthers aliphatiques et les hydrocarbures halogénés.

7. Procédé selon l'une quelconque des revendications 1 à 6, caractérisé en ce que la quantité de catalyseur utilisé pour le durcissement du méthyloldihydroxydiphénylméthylènéther est telle que le pH de la composition soit inférieur à 4.

8. Procédé selon la revendication 7, caractérisé en ce que le catalyseur de durcissement est choisi parmi les acides sulfoniques organiques comportant dans leur molécule :

— un ou plusieurs noyaux aromatiques

— un groupement hydroxyle du type phénolique sur au moins l'un de ces noyaux

— un ou plusieurs groupements acide sulfonique sur au moins l'un de ces noyaux

— et éventuellement une chaîne hydrocarbonée $C_nH_{2n}$ pour lier les noyaux entre eux.

9. Procédé selon la revendication 8, caractérisé en ce que les acides sulfoniques sont choisis parmi :

— les acides phénolsulfoniques $C_6H_4(OH)(SO_3H)$ mélange des isomères

— les acides crésolsulfoniques $C_6H_3(CH_3)(OH)(SO_3H)$
— les acides naphtolsulfoniques $C_{10}H_6(OH)(SO_3H)$
— les acides dihydroxydiphénylméthanesulfoniques $C_6H_4OH—CH_2—C_6H_3(OH)(SO_3H)$
— les acides dihydroxydiphénylpropanesulfoniques $C_6H_4OH—C(CH_3)_2C_6H_3(OH)(SO_3H)$
— les acides dihydroxydiphénylbutanesulfoniques $C_6H_5(OH)—C(CH_3)(C_2H_5)C_6H_3(OH)(SO_3H)$
— les acides poly-hydroxyphénylméthylène sulfoniques $H\text{-}[C_6H_2(OH)(SO_3H)—CH_2]_n—C_6H_3(OH)(SO_3H)$
— et les acides polysulfoniques obtenus par sulfonation partielle des résines novolaques liquides de formule générale similaire à la formule précédente, mais dans laquelle le nombre de groupements sulfoniques est inférieur au nombre de noyaux hydroxyphényl.

10. Procédé de fabrication de résines alvéolaires selon l'une quelconque des revendications 1 à 9, caractérisé en ce que les constituants du mélange réactionnel sont mis en œuvre par les techniques de coulée, injection, projection ou pulvérisation.

11. Procédé selon la revendication 10, caractérisé en ce que les constituants du mélange réactionnel sont mis en œuvre avec une machine pour l'application des systèmes chimiques en deux composants à rapport volumétrique fixe ou variable.

12. Procédé de fabrication de granulés alvéolaires par fragmentation des résines alvéolaires obtenues selon les revendications 10 et 11.

13. Application des résines alvéolaires selon l'une quelconque des revendications 1 à 12 à l'isolation thermique et phonique.

14. Application des résines alvéolaires selon la revendication 13 à l'isolation thermique des bâtiments, caractérisée en ce que la résine alvéolaire est fabriquée sur chantier selon l'une des techniques suivantes :
— injection dans le vide d'air entre mur et cloison
— épandage sur les sols de combles
— projection sur les façades
— pulvérisation sur les sous-faces des dalles.

**Claims**

1. A process for the production of foamed resins, characterized in that it consists in performing, in the presence of a hardening catalyst, the condensation of at least one of the isomers of methyloldihydroxydiphenylmethylene ether of empirical formula $C_{15}H_{16}O_4$.

2. A process according to Claim 1, characterized in that the said isomers are :
— 3-methylol-2,2'-dihydroxy-diphenylmethylene ether of formula :

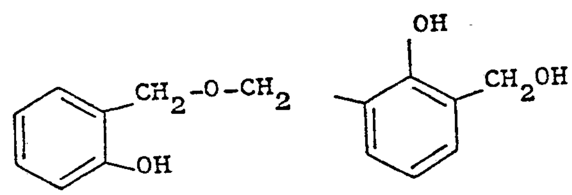

— and 3-methylol-2,4'-dihydroxy-diphenylmethylene ether of formula :

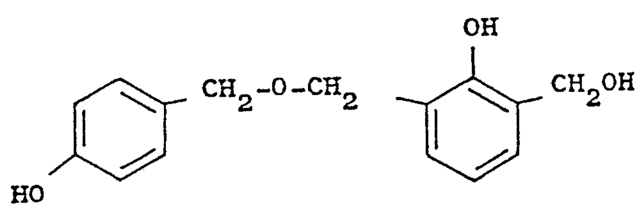

3. A process according to Claims 1 and 2, characterized in that the source of the isomers is raw manufactured batches containing methyloldihydroxydiphenylmethylene ether mixed with water, methylolphenol and dimethylolphenol.

4. A process according to one or other of Claims 1 to 3, characterized in that the condensation of at least one of the isomers of methyloldihydroxydiphenylmethylene ether is performed in the presence of a foaming agent and/or a surface agent.

5. A process according to one or other of Claims 1 to 4, characterized in that the content of insoluble foaming agent is within the range of 0.1 % to 12 % and that the content of surface agent is within the range of 0.01 % to 6 %.

6. A process according to Claims 4 and 5, characterized in that the insoluble foaming agent is

selected from amongst the saturated aliphatic hydrocarbons, aliphatic ethers, and halogen derivatives of hydrocarbons.

7. A process according to one or other of Claims 1 to 6, characterized in that the quantity of catalyst used for the hardening of methyloldihydroxydiphenylmethylene ether is such that the pH of the composition is less than 4.

8. A process according to Claim 7, characterized in that the hardening catalyst is selected from amongst the organic sulphonic acids the molecules of which contain :

— one or more aromatic closed chains,

— a hydroxyl group of the phenolic type on at least one of these closed chains,

— one or more sulphonic acid groups on at least one of these closes chains,

— and possibly a hydrocarbon chain $C_nH_{2n}$ to link the closed chains together.

9. A process according to Claim 8, characterized in that the sulphonic acids are selected from amongst :

— the phenylsulphonic acids $C_6H_4(OH)(SO_3H)$, mixture of isomers,

— the cresolsulphonic acids $C_6H_3(CH_3)(OH)(SO_3H)$,

— the naphtholsulphonic acids $C_{10}H_6(OH)(SO_3H)$,

— the dihydroxydiphenylmethanesulphonic acids, $C_6H_4OH—CH_2—C_6H_3(OH)(SO_3H)$,

— the dihydroxydiphenylpropanesulphonic acids, $C_6H_4OH—C(CH_3)_2—C_6H_3(OH)(SO_3H)$,

— the dihydroxydiphenylbutanesulphonic acids, $C_6H_5OH—C(CH_3)(C_2H_5)\text{-}C_6H_3(OH)(SO_3H)$,

— the poly-hydroxyphenylmethylenesulphonic acids, $H\text{-}[C_6H_2(OH)(SO_3H)—CH_2]_n—C_6H_3(OH)(SO_3H)$,

— and the polysulphonic acids obtained by partial sulphonation of liquid novolac resins of general formula similar to the previous formula, but in which the number of sulphonic groups is less than the number of hydroxyphenyl closed chains.

10. A process for the manufacture of foamed resins according to one or other of Claims 1 to 9, characterized in that the constituents of the reactive mixture are brought into action by pouring, injection, projection or pulverization methods.

11. A process according to Claim 10, characterized in that the constituents of the reactive mixture are brought into action by means of a machine for the application of two-part chemical systems in a volumetric ratio that is fixed or variable.

12. A process for the manufacture of foamed granules by fragmentation of foamed resins obtained in accordance with Claims 10 and 11.

13. The application of foamed resins according to one or other of Claims 1 to 12 for thermal and acoustic insulation.

14. The application of foamed resins according to Claim 13 for the thermal insulation of buildings, characterized in that the foamed resin is manufactured on site according to one of the following methods :

— injection into the air-space between wall and partition,

— spreading on the floors of roof-spaces,

— projection on to facades,

— pulverization on the under faces of paving stones.

**Patentansprüche**

1. Verfahren zur Herstellung von Schaumstoffen, dadurch gekennzeichnet, daß man in Gegenwart eines Härtungskatalysators die Kondensation mindestens eines der Isomeren von Hydroxymethyl-dihydroxydiphenyl-methylenether der allgemeinen Formel $C_{15}H_{16}O_4$ durchführt.

2. Verfahren nach Anspruch 1, dadurch gekennzeichnet, daß diese Isomeren : 3-Hydroxymethyl-, 2,2'-Dihydroxy-diphenylmethylenether der Formel :

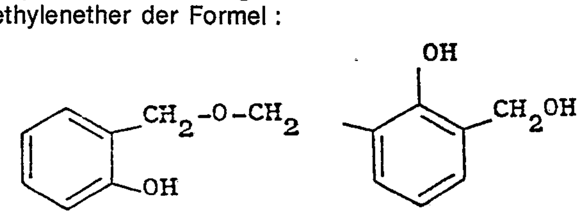

und 3-Hydroxymethyl-, 2,4'-Dihydroxy-diphenylmethylenether der Formel :

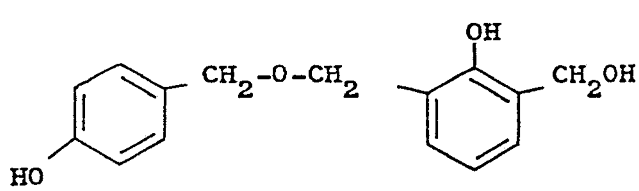

sind.

3. Verfahren nach den Ansprüchen 1 oder 2, dadurch gekennzeichnet, daß die Isomeren von Fabrikationsrohchargen stammen, die Hydroxymethyl-dihydroxydiphenyl-methylenether in Mischung mit Wasser, Hydroxymethylphenol und Dihydroxymethylphenol enthalten.

4. Verfahren nach einem der Ansprüche 1 bis 3, dadurch gekennzeichnet, daß die Kondensation von mindestens einem der Isomeren des Hydroxymethyl-dihydroxydiphenyl-methylenethers in Anwesenheit eines Schaumbildners und/oder eines Tensids durchgeführt wird.

5. Verfahren nach einem der Ansprüche 1 bis 4, dadurch gekennzeichnet, daß der Gehalt an unlöslichem Schaumbildner 0,1 bis 12 % beträgt und der Gehalt an Tensid zwischen 0,01 und 6 % liegt.

6. Verfahren nach einem der Ansprüche 4 oder 5, dadurch gekennzeichnet, daß der unlösliche Schaumbildner ausgesucht wird aus gesättigten aliphatischen Kohlenwasserstoffen, aliphatischen Ethern und halogenierten Kohlenwasserstoffen.

7. Verfahren nach einem der Ansprüche 1 bis 6, dadurch gekennzeichnet, daß die Menge an Katalysator, der für die Härtung von Hydroxymethyl-dihydroxydiphenyl-methylenether verwendet wird so ist, daß der pH der Zusammensetzung unterhalb von 4 liegt.

8. Verfahren nach Anspruch 7, dadurch gekennzeichnet, daß der Härtungskatalysator ausgewählt ist aus organischen Sulfonsäuren, die im Molekül enthalten : ein oder mehrere aromatische Ringe, eine phenolische Hydroxylgruppe in mindestens einem der Ringe, ein oder mehrere Sulfonsäuregruppen in mindestens einem der Ringe und gegebenenfalls eine Kohlenwasserstoffkette $C_nH_{2n}$ um die Ringe miteinander zu verbinden.

9. Verfahren nach Anspruch 8, dadurch gekennzeichnet, daß die Sulfonsäuren ausgewählt sind aus : einer Mischung der Isomeren der Phenolsulfonsäuren $C_6H_4(OH)(SO_3H)$, den Cresolsulfonsäuren $C_6H_3(CH_3)(OH)(SO_3H)$, den Naphtholsulfonsäuren $C_{10}H_6(OH)(SO_3H)$, den Dihydroxydiphenylmethansulfonsäuren $C_6H_4OH—CH_2—C_6H_3(OH)(SO_3H)$, den Dihydroxydiphenylpropan-sulfonsäuren $C_6H_4OH—C(CH_3)_2C_6H_3(OH)(SO_3H)$, den Dihydroxydiphenylbutansulfonsäuren $C_6H_5(OH)—C(CH_3)(C_2H_5)C_6H_3(OH)(SO_3H)$, den Polyhydroxyphenyl-methylensulfonsäuren $H—(C_6H_2(OH)(SO_3H)—CH_2)_n—C_6H_3(OH)(SO_3H)$ und den Polysulfonsäuren, die durch teilweise Sulfonierung der flüssigen Novolackharze mit einer allgemeinen Formel, die der vorhergehenden Formel gleicht, aber in der die Anzahl der Sulfonsäuregruppen weniger als die Anzahl der Hydroxyphenylringe beträgt, erhalten wurde.

10. Verfahren zur Herstellung der Schaumstoffe nach einem der Ansprüche 1 bis 9, dadurch gekennzeichnet, daß die Bestandteile der Reaktionsmischung verarbeitet werden durch Guß-, Spritzguß, Spritz- oder Zerstäubungstechniken.

11. Verfahren nach Anspruch 10, dadurch gekennzeichnet, daß die Bestandteile der Reaktionsmischung mit einer Vorrichtung zur Anwendung chemischer Systeme mit zwei Bestandteilen mit festem oder variablem Mengenverhältnis verarbeitet werden.

12. Verfahren zur Herstellung von Schaumstoffgranulat durch Zerkleinerung von Schaumstoffen, erhalten nach einem der Ansprüche 10 oder 11.

13. Verwendung der Schaumstoffe nach einem der Ansprüche 1 bis 12 zur Wärme- und Lärmisolation.

14. Verwendung der Schaumstoffe nach Anspruch 13 zur Wärmeisolierung von Bauwerken, dadurch gekennzeichnet, daß der Schaumstoff auf der Baustelle nach einer der folgenden Techniken verarbeitet wird : Injektion in den luftleeren Raum zwischen Mauer und Abgrenzung, Berieselung der Dachböden, Spritzen auf die Fassaden, Zerstäubung auf die Unterseite der Platten.